# EUROPÄISCHE PATENTSCHRIFT

(11) **EP 2 329 971 B1**
(45) Veröffentlichungstag und Bekanntmachung des Hinweises auf die Patenterteilung: **13.03.2013**
(21) Anmeldenummer: 10015025.9
(22) Anmeldetag: 26.11.2010
(51) Int. Cl.: B60G 17/02, B60G 15/06

(54) **Federbeinanordnung für eine Radaufhängung eines Kraftfahrzeuges**
Suspension strut assembly for a wheel suspension of a motor vehicle
Agencement de jambe de force pour une suspension de roue d'un véhicule automobile

(30) Priorität: 04.12.2009 DE 102009057003
(43) Veröffentlichungstag der Anmeldung: 08.06.2011
(73) Patentinhaber: Audi AG, 85045 Ingolstadt (DE)
(72) Erfinder: Michel, Wilfried, 93339 Riedenburg (DE)
(74) Vertreter: Asch, Konrad

(56) Entgegenhaltungen:
- DE-A1- 10 122 542
- DE-A1- 10 345 987
- DE-A1-102007 060 422
- DE-B3-102005 001 744
- FR-A1- 2 840 257
- US-A- 4 248 410

## Beschreibung

Die Erfindung betrifft eine Federbeinanordnung für eine Radaufhängung eines Kraftfahrzeuges gemäß dem Oberbegriff des Patentanspruches 1.

Eine derartige Radaufhängung beschreibt die DE 10 2005 001 744 B3, bei der eine am Federbein oberhalb der Tragfeder konzentrisch angeordnete Speicherfeder vorgesehen ist, die der Federkraft der Tragfeder entgegenwirkt und somit die Verstellkräfte vermindert, die ein elektromechanischer Aktuator beziehungsweise ein Stelltrieb aufbringen muss, um über den axial verstellbaren Federteller des Federbeines eine Niveauverstellung und/oder einen Nick- und Wankausgleich am Kraftfahrzeug zu bewirken.

Verfolgt man den Lastpfad, den die Federkräfte und die Dämpferkräfte und letztlich die Anschlagpufferkräfte im Federbein nehmen, so kann man erkennen, dass sowohl die Federkräfte als auch die Dämpferkräfte zwangsläufig vom gemeinsamen Anschlusslager aufgenommen werden. Dies ist mit großen Nachteilen, auch im Hinblick auf den Fahrkomfort, verbunden. Das gemeinsame Anschlusslager ist stets vorgespannt, auch schon bei leerem Fahrzeug, und die Kräfte steigen bei zunehmender Einfederung auch noch an. Es liegt also von Grund auf eine Verhärtung des Anschlusslagers vor, was jedoch kontraproduktiv zur Aufnahme der Dämpferkräfte ist. Die Kräfte, welche in den Stoßdämpfer eingeleitet werden, müssen von einem möglichst weichen Lager aufgenommen werden. Das Dämpferlager selbst muss dabei direkt im Karosseriedom gelagert werden. Weiterhin hat ein technisch richtig ausgelegtes Dämpferlager vor allen Dingen die Aufgabe, die hochfrequenten Schwingungen, welche von der Fahrbahn herrühren, zu dämpfen, damit diese nicht an den Fahrzeugaufbau weitergegeben werden. Die Amplituden sind dabei so klein, dass der Kolben im Dämpfer nicht losbricht. Somit müssen diese Mikrobewegungen vom Dämpferlager aufgenommen werden. Auch die Anschlagpufferkräfte sollten möglichst sauber und eindeutig in das separate Dämpferlager direkt in den Fahrzeugaufbau eingeleitet werden.

FR-A-284 257 zeigt eine Federbeinanordnung, worin des Lastpfad des Teleskopdämfers zum Fahrzeug aufbau vom Federbeinlager entkoppeld ist.

Aufgabe der Erfindung ist es deshalb, eine Federbeinanordnung der gattungsgemäßen Art vorzuschlagen, die bei einer baulich gedrängten, funktionell vorteilhaften Konstruktion eine verbesserte Schwingungs- und Geräuschdämpfung gegenüber der Fahrzeugkarosserie bietet.

Diese Aufgabe wird erfindungsgemäß mit den Merkmalen des Patentanspruches 1 gelöst. Vorteilhafte Weiterbildungen der Erfindung beschreiben die weiteren Patentansprüche.

Erfindungsgemäß wird vorgeschlagen, dass die Tragfeder, die Speicherfeder und der Stelltrieb des Federbeines über ein gummielastisches Federbeinlager und der Stoßdämpfer über ein gummielastisches Dämpferlager am Aufbau des Kraftfahrzeuges derart abgestützt sind, dass ein Lastpfad des Teleskop-Stoßdämpfers zum Fahrzeugaufbau vom Federbeinlager entkoppelt ist. Damit gelingt es, die Lagerkennwerte des Dämpferlagers auf die auftretenden, unterschiedlichen Belastungen im Fahrbetrieb optimal abzustimmen. So kann das Federbeinlager für die Abstützung der Federung beziehungsweise des Fahrzeuggewichts härter ausgelegt sein, während das Dämpferlager für den Stoßdämpfer insbesondere auf hochfrequente Schwingungen geringerer Amplitude weicher abgestimmt ist, wodurch insgesamt der Fahrkomfort des Kraftfahrzeuges verbessert ist.

Erfindungsgemäß hat daher sowohl der Teleskop-Stoßdämpfer als auch die Trag- und Speicherfedern jeweils ein eigenes Elastomerlager, die funktionell voneinander unabhängig sind. Dabei ist es von Relevanz, dass der Teleskop-Stoßdämpfer im Wesentlichen von der Stellspindel entkoppelt ist. Hierzu ist zwischen der Stellspindel und dem Teleskop-Stoßdämpfer eine Führungshülse angeordnet ist. Auf der Führungshülse ist die Stellspindel drehbar gelagert. Im Ergebnis ist somit der innerhalb der Führungshülse angeordnete Teleskop-Stoßdämpfer funktionell getrennt von der radial äußeren Stellspindel. Der über den Teleskop-Stoßdämpfer geführte Lastpfad ist somit entkoppelt vom Lastpfad der Speicher- und Tragfedern.

Bevorzugt kann zwischen der Führungshülse und dem radial innenliegenden Teleskop-Stoßdämpfer ein definiertes Umfangsspiel vorgesehen sein. Dadurch kann das Dämpferrohr des Teleskop-Stoßdämpfers mit dem Dämpferlager frei schwingen beziehungsweise von den über das Federbeinlager abgestützten Bauteilen schwingungstechnisch vollständig entkoppelt sein.

Zur Erzielung eines kinematisch günstigen Zusammenwirkens der Konstruktionsteile des Federbeines wird des Weiteren vorgeschlagen, dass das Federbeinlager und das Dämpferlager Flächenschwerpunkte aufweisen, die sich an identischen geometrischen Orten befinden. Daraus resultiert, dass bei Ein- und Ausfederbewegungen der Radaufhängung die getrennt angelenkten Bauteile der Federung und des Stelltriebes einerseits und des Stoßdämpfers andererseits etwa gleiche Auslenkungen mit Bezug zu einer definierten Konstruktionslage erfahren und somit keinen Reibungsbeanspruchungen, Verzwängungen, etc. unterliegen. Des Weiteren wird ein Auswandern der Dämpfermittelachse gegenüber der Federbeinmittelachse vermieden.

In baulich vorteilhafter Weise kann das radial innenliegende Dämpferlager durch zwei beiderseits eines tassenförmigen, am Aufbau vorgesehenen Stützteiles angeordnete Elastomerringe gebildet sein, die an einem zapfenförmigen Fortsatz des Stoßdämpfers und zwischen Anschlagscheiben mittels einer Schraubverbindung eingespannt sind. Ein derartiges, im Aufbau besonders einfaches Dämpferlager benötigt wenig Einbauraum bei einer zuverlässigen Funktion.

Ferner kann das tassenförmige Stützteil an einem domartigen Abschnitt des Aufbaus des Kraftfahrzeuges angeformt sein, an dem auch der äußere Lagerring des Federbeinlagers abgestützt ist. Der domartige Abschnitt kann eine separate Lageraufnahme sein, oder er kann unmittelbar an einem Bauteil des Aufbaus, zum Beispiel in einem Radhaus, angeformt sein und somit besonders montagegünstig beide Lager aufbauseitig aufnehmen.

Eine schwingungstechnisch günstige Auslegung des Federbeinlagers wird zudem erzielt, wenn dessen elastischer Lagerkörper im Wesentlichen konusförmig und sich nach oben verjüngend ausgeführt ist. Der Lagerkörper wird dabei sowohl auf Druck als auch auf Schub belastet und kann somit durch konstruktive Maßnahmen vorteilhaft auf die gewünschten Lagerkennwerte abgestimmt werden.

Des Weiteren kann der innere Lagerring des Federbeinlagers mit einer Tragplatte zusammenwirken, an der ein topfförmiges Gehäuse des ringförmigen Elektromotors des Stelltriebes und radial innenliegend die Führungshülse befestigt sind, wobei auf der Führungshülse die Stellspindel des Kugelgewindetriebes mit dem Rotor des Elektromotors drehbar gelagert ist. Somit können die statischen und dynamischen Radlasten relativ direkt in das Federbeinlager und über dieses in den Aufbau des Kraftfahrzeuges eingeleitet werden.

Ferner kann in weiterer, vorteilhafter Ausgestaltung der Erfindung die Tragplatte mit einem nabenförmigen Fortsatz in den inneren Lagerring des Federbeinlagers einragen und mittels einer im Querschnitt hutförmigen Ringschraube befestigt sein, wobei die Ringschraube mit einem Außengewinde in ein Innengewinde des Fortsatzes eingeschraubt ist und ein radial nach außen ragender Flanschabschnitt der Ringschraube an der korrespondierenden Stirnfläche des Lagerinnenringes anliegt. Damit ist eine robuste und wenig Bauraum erfordernde Anbindung der Tragplatte am Federbeinlager geschaffen. Außerdem dient die Stirnfläche des Flanschabschnittes als Zuganschlag.

Zudem kann in baulich besonders günstiger Weise die Führungshülse einen im Durchmesser verminderten Nabenabschnitt aufweisen, der ein in axialer und radialer Richtung wirkendes Wälzlager trägt, über das die Stellspindel drehbar gelagert ist, wobei der Nabenabschnitt die Tragplatte unterhalb des Dämpferlagers durchdringt und mit der Tragplatte über eine Gewindeverbindung verschraubt ist. Die Stellspindel kann dabei über zwei axial voneinander beabstandete Wälzlager drehbar auf der Führungshülse gelagert sein, wobei das obere Lager ein Vierpunkt-Kugellager und das untere Lager ein Rollen- oder Nadellager ist.

In vorteilhafter Weiterbildung der Erfindung kann der zapfenförmige Fortsatz am Dämpferrohr des Stoßdämpfers ausgebildet sein, wobei der Fortsatz den Nabenabschnitt der Führungshülse und das Dämpferlager durchdringt, wobei ferner die Führungshülse mit dem Nabenabschnitt das bereits weiter oben erwähnte definierte Umfangsspiel zum radial innenliegenden Dämpferrohr aufweist. Neben einer im Bereich des Stelltriebes besonders biegesteifen Konstruktion des Federbeines kann dadurch um die Kolbenstange des an einer Stützstrebe mit einem unteren Federteller befestigten Stoßdämpfers ein gummielastischer Anschlagpuffer angeordnet werden, der sich bei einer stärkeren Kompression des Federbeines an dem darüber liegenden Dämpferrohr als Zusatzfeder anlegt.

Ein Ausführungsbeispiel der Erfindung ist im Folgenden mit weiteren Einzelheiten näher erläutert. Die schematische Zeichnung zeigt in:
- **Fig. 1**: einen Längsschnitt durch ein Federbein für eine Radaufhängung von Kraftfahrzeugen, mit einem Teleskop-Stoßdämpfer, einer Tragfeder, einer Speicherfeder und einem elektrischen Aktuator mit einem Kugelgewinde-Stelltrieb;
- **Fig. 2**: eine Teilansicht des Federbeines gemäß Fig. 1 in vergrößerter Darstellung des Stelltriebes und der beiden Elastomerlager; und
- **Fig. 3**: eine weiter vergrößerte Teilansicht des Federbeines nach den Fig. 1 und 2 mit Darstellung des oberen Abschnittes des Stelltriebes, der Tragplatte mit Elektromotor und der beiden Elastomerlager.

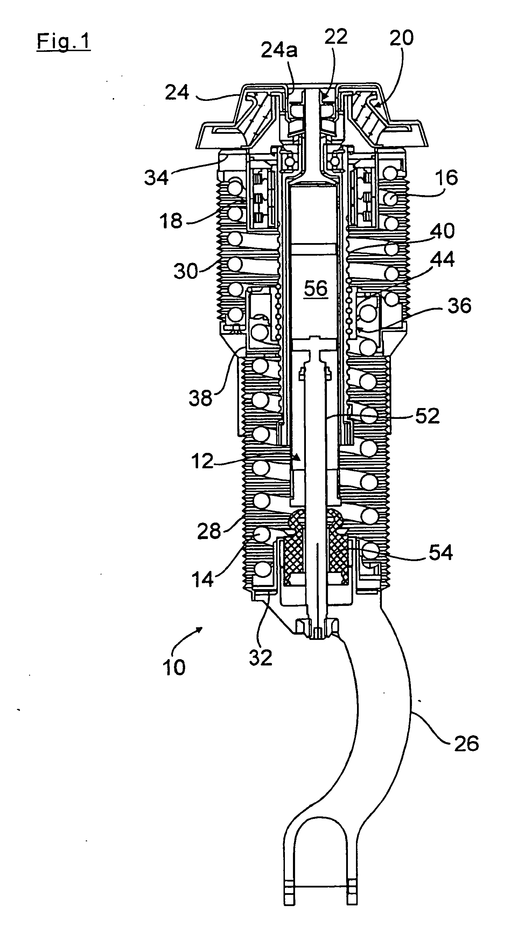

Das Federbein 10 gemäß **Fig. 1** weist im Wesentlichen einen Teleskop-Stoßdämpfer 12, eine Tragfeder 14, eine Speicherfeder 16 und einen elektromechanischen Aktuator 18 auf.

Das Federbein 10 ist an seinem oberen Ende über ein Federbeinlager 20 und ein Dämpferlager 22 an einer domartigen Ausbuchtung 24 des nicht weiter dargestellten Aufbaus des Kraftfahrzeuges abgestützt. Das Federbeinlager 20 und das Dämpferlager 22 sind funktionell voneinander getrennte ringförmige Elastomerlager. Das untere Ende des Federbeines 10 ist über eine Stützstrebe 26 an einem nicht dargestellten Radaufhängungselement, zum Beispiel einem Lenker oder einem Radträger angelenkt. Äußere, gummielastische Schutzmanschetten 28, 30 schließen das Federbein 10 im Bereich der Federn 14, 16 und des Aktuators 18 gegen Umwelteinflüsse nach außen ab.

Die Tragfeder 14 und die Speicherfeder 16 sind wie ersichtlich als Schraubendruckfedern ausgeführt und über Federteller 32, 34 an der Stützstrebe 26 und an dem Aufbau 24 in noch zu beschreibender Weise abgestützt. Zwischen der Tragfeder 14 und der Speicherfeder 16 ist ferner ein über einen Stelltrieb 36 axial verschiebbarer Verstellfederteller 38 angeordnet, an dem sich in Reihe geschaltet die Tragfeder 14 und die Speicherfeder 16 abstützen.

Durch axiales Verschieben des Verstellfedertellers 38 über den Stelltrieb 36 kann der Aufbau 24 des Kraftfahrzeuges zur Niveauregulierung und/oder Nick- und Wankstabilisierung angehoben oder abgesenkt werden, wobei die Speicherfeder 16 die erforderlichen Verstellkräfte wesentlich absenkt.

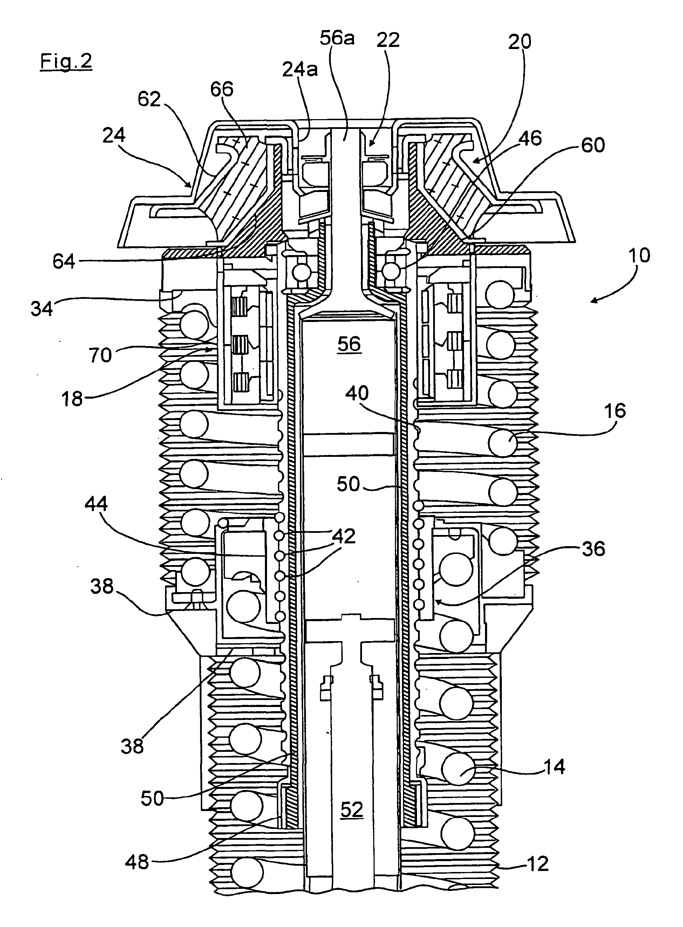

Der Stelltrieb 36 ist ein Kugelgewindetrieb mit einer radial inneren, hülsenförmigen Stellspindel 40 (vergleiche **Fig. 2**) und einer über dazwischen angeordnete Kugeln 42 axial verstellbaren Kugelmutter 44. Die Kugelmutter 44 ist fest mit dem doppelseitig beaufschlagten Verstellfederteller 38 verbunden und über die Vorspannkraft der beiden Federn 14, 16 unverdrehbar gehalten.

Die Stellspindel 40 ist an ihren beiden stirnseitigen Enden über Wälzlager 46, 48 drehbar auf einer radial inneren Führungshülse 50 gelagert, wobei das obere Wälzlager 46 als ein axial und radial führendes Vierpunkt-Kugellager und das untere Wälzlager 48 als ein Nadellager ausgeführt ist.

An der Kolbenstange 52 des Stoßdämpfers 12 ist zudem ein gummielastischer Anschlagpuffer 54 (**Fig. 1**) angeordnet, der als Anschlag und Zusatzfeder innerhalb des Federbeines 10 im Zusammenwirken mit dem nach oben anschließenden Dämpferrohr 56 des Stoßdämpfers 12 dient.

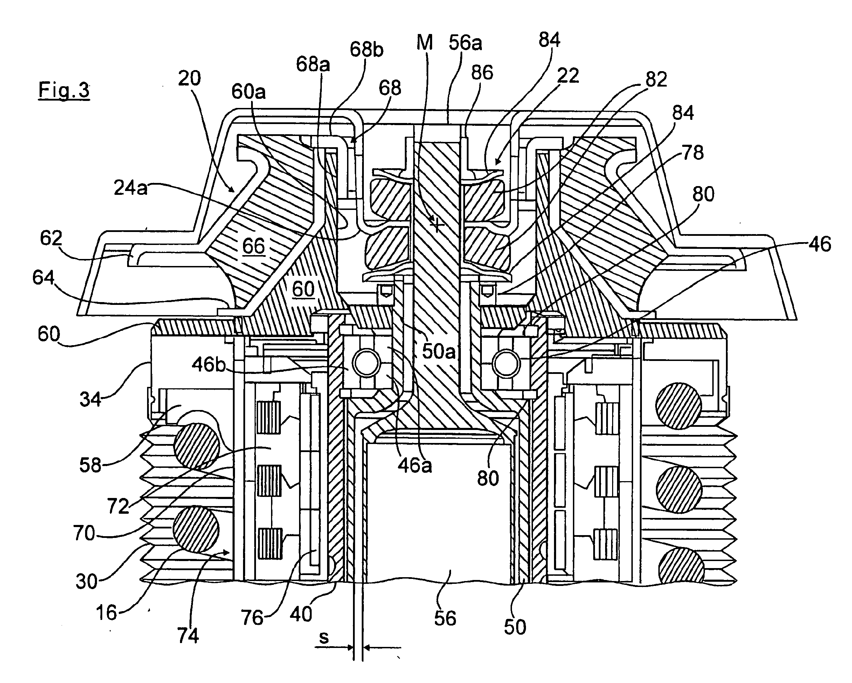

Die oberhalb der Tragfeder 14 angeordnete Speicherfeder 16 (vergleiche insbesondere **Fig. 3**) stützt sich unter Zwischenschaltung eines Dämpfungsringes 58 (solche Dämpfungsringe 58 sind in bekannter Weise auch an den übrigen Federtellern 38, 32 vorgesehen) über den Federteller 34 an einer Tragplatte 60 ab, die wiederum mit einem nach oben ragenden, rohrförmigen Fortsatz 60a das Federbeinlager 20 aufnimmt.

Das Federbeinlager 20 setzt sich aus einem äußeren, an der Ausbuchtung 24 des Aufbaus des Kraftfahrzeuges abgestützten Lagerring 62, einem inneren Lagerring 64 und dem dazwischen befindlichen, gummielastischen Lagerkörper 66 zusammen. Wie ersichtlich ist, ist das Federbeinlager 20 konisch nach oben sich verjüngend ausgeführt.

Der innere Lagerring 64 ist des Weiteren mittels einer im Querschnitt L-förmigen Ringschraube 68 gegen den Fortsatz 60a der Tragplatte 60 gespannt, wobei die Ringschraube 68 mit einem Außengewinde 68a in ein korrespondierendes Innengewinde des Fortsatzes 60a eingeschraubt ist, während der Flanschabschnitt 68b der Ringschraube 68 wie ersichtlich die Stirnseite des Fortsatzes 60a überspannt.

Die Tragplatte 60 trägt ferner ein nach unten abragendes, topfförmiges Gehäuse 70, innerhalb dem der Stator 72 des die Stellspindel 40 antreibenden, ringförmigen Elektromotors 74 des Aktuators 18 angeordnet ist. Der Rotor 76 des Elektromotors 74 ist auf der Stellspindel 40 befestigt.

Die Führungshülse 50 durchragt mit einem im Durchmesser geringeren Nabenabschnitt 50a die Tragplatte 60 und ist an dieser unterhalb des Dämpferlagers 22 über eine relativ flache Lochmutter 78 befestigt, die auf einen Gewindeabschnitt des Nabenabschnittes 50a aufgeschraubt ist. Die Lochmutter 78 spannt dabei den Nabenabschnitt 50a mit den Lagerinnenringen 46a des Wälzlagers 46 gegen den zentralen Bereich der Tragplatte 60, während der korrespondierende Lageraußenring 46b mit Sicherungsringen 80 in der Stellspindel 40 gehalten ist.

Das Dämpferlager 22 setzt sich aus zwei Elastomerringen 82 und zwei diese einspannende Anschlagscheiben 84 zusammen, wobei die Elastomerringe 82 beiderseits eines an die Ausbuchtung 24 angeformten, tassenförmigen Stützteiles 24a positioniert sind.

Der zapfenförmige Fortsatz 56a des Dämpferrohres 56 des Stoßdämpfers 12 durchragt, wie insbesondere aus der **Fig. 3** ersichtlich ist, den nabenförmigen Abschnitt 50a der Führungshülse 50 und ist über die Anschlagscheiben 84 und eine Schraubenmutter 86 an dem nach unten abragenden Stützteil 24a gehalten.

Besonders beachtlich ist dabei, dass der zapfenartige Fortsatz 56a und das anschließende Dämpferrohr 56 des Stoßdämpfers 12 zur Führungshülse 50 mit dem nabenförmigen Abschnitt 50a ein derartiges Umfangsspiel s aufweisen, dass das Dämpferrohr 56 mit dem Dämpferlager 22 frei schwingen kann beziehungsweise von den über das Federbeinlager 20 abgestützten Bauteilen schwingungstechnisch vollständig entkoppelt ist.

So stützen sich im wesentlichen die Tragfeder 14, die Speicherfeder 16 und der Stelltrieb 18 über die Tragplatte 60 und das Federbeinlager 20 am Aufbau 24 ab, während der Stoßdämpfer 12 und der Anschlagpuffer 54 über das Dämpferlager 22 mit dem Aufbau 24 verbunden sind.

Das Federbeinlager 20 und das Dämpferlager 22 können somit hinsichtlich ihrer Lagerkennwerte exakt auf die im Fahrbetrieb des Kraftfahrzeuges auftretenden Anforderungen an Radlasten und Dämpferkräfte abgestimmt werden. Wie aus der **Fig. 3** weiter hervorgeht, weisen das Federbeinlager 20 und das Dämpferlager 22 einen gemeinsamen Flächenschwerpunkt der korrespondierenden Axialschnitte auf, wodurch eine Auswanderung der Dämpferachse gegenüber der Federachse in Grenzen gehalten werden kann.

## Patentansprüche

1. Federbeinanordnung für eine Radaufhängung eines Kraftfahrzeuges, die aus einem Teleskop-Stoßdämpfer (12), einer Tragfeder (14) und einer Speicherfeder (16) gebildet ist, wobei die Tragfeder (14) und die Speicherfeder (16) über Federteller (32, 34) am Aufbau (24) des Kraftfahrzeuges und an einem Radaufhängungselement abgestützt sind und ein dazwischen befindlicher, dritter Federteller (38) über einen innerhalb der Federn (14, 16) angeordneten, elektrisch angetriebenen Stelltrieb (36) relativ zum Aufbau (24) entlang der Stoßdämpfer-Längsachse verschiebbar geführt ist, wobei der Stelltrieb (36) eine drehbar um den Stoßdämpfer (12) gelagerte Stellspindel (40) und eine mit dem verschiebbaren Federteller (38) verbundene Stellmutter (44) aufweist, wobei die Tragfeder (14) und die Speicherfeder (16) über ein gummielastisches Federbeinlager (20) und der Stoßdämpfer (12) über ein gummielastisches Dämpferlager (22) am Aufbau (24) des Kraftfahrzeuges derart abgestützt sind, dass ein Lastpfad des Teleskop-Stoßdämpfers (12) zum Fahrzeugaufbau (24) vom Federbeinlager (20) entkoppelt ist, **dadurch gekennzeichnet, dass** zur Entkopplung des Teleskop-Stoßdämpfers (12) von der Stellspindel (40) der Stelltrieb (36) zusammen mit der Tragfeder (14) und der Speicherfeder (16) über das gummielastische Federbeinlager (20) am Aufbau (24) des Kraftfahrzeugs abgestützt ist, und dass zwischen der Stellspindel (40) und dem Teleskop-Stoßdämpfer (12) eine Führungshülse (50) angeordnet ist, innerhalb der der Teleskop-Stoßdämpfer (12) angeordnet ist und auf der die radial äußere Stellspindel (40) drehbar gelagert ist.

2. Federbeinanordnung nach Anspruch 1, **dadurch gekennzeichnet, dass** zwischen der Führungshülse (50) und dem radial innenliegenden Teleskop-Stoßdämpfer (12) ein definiertes Umfangsspiel (s) vorgesehen ist.

3. Federbeinanordnung nach Anspruch 1 oder 2, **dadurch gekennzeichnet, dass** das Federbeinlager (20) über einen äußeren Lagerring (62) am Fahrzeugaufbau (24) abgestützt ist, und dass das Dämpferlager (22) über ein Stützteil (24a) am Fahrzeugaufbau (24) abgestützt ist.

4. Federbeinanordnung nach Anspruch 3, **dadurch gekennzeichnet, dass** das tassenförmige Stützteil (24a) an einem dornartigen Abschnitt des Fahrzeugaufbaus (24) angeformt ist, an dem auch der äußere Lagerring (62) des Federbeinlagers (20) abgestützt ist.

5. Federbeinanordnung nach einem der vorhergehenden Ansprüche, **dadurch gekennzeichnet, dass** der innere Lagerring (64) des Federbeinlagers (20) mit einer Tragplatte (60) zusammenwirkt, an der insbesondere ein topfförmiges Gehäuse (70) des ringförmigen Elektromotors (74) des Stelltriebes (36) und/oder radial innenliegend die Führungshülse (50) befestigt sind.

6. Federbeinanordnung nach einem der vorhergehenden Ansprüche, **dadurch gekennzeichnet, dass** die Flächenschwerpunkte des Federbeinlagers (20) und des Dämpferlagers (22) zumindest im Wesentlichen identische geometrische Orte aufweisen.

7. Federbeinanordnung nach den Ansprüchen 3 bis 6, **dadurch gekennzeichnet, dass** das radial innenliegende Dämpferlager (22) durch zwei beiderseits des tassenförmigen, am Aufbau (24) vorgesehenen Stützteiles (24a) angeordnete Elastomerringe (82) gebildet ist, die insbesondere an einem zapfenförmigen Fortsatz (56a) des Stoßdämpfers (12) zwischen Anschlagscheiben (84) mittels einer Schraubverbindung (86) eingespannt sind.

8. Federbeinanordnung nach einem der vorhergehenden Ansprüche, **dadurch gekennzeichnet, dass** der elastische Lagerkörper (66) des ersten Federbeinlagers (20) im Wesentlichen konusförmig und sich nach oben verjüngend ausgeführt ist.

9. Federbeinanordnung nach Anspruch 5 bis 8, **dadurch gekennzeichnet, dass** die Tragplatte (60) mit einem nabenförmigen Fortsatz (60a) den inneren Lagerring (64) des Federbeinlagers (20) umschließt und mittels einer im Querschnitt hutförmigen Ringschraube (68) befestigt ist, wobei die Ringschraube (68) mit einem Außengewinde (68a) in ein Innengewinde des Fortsatzes (60a) eingeschraubt ist und ein radial nach außen ragender Flanschabschnitt (68b) der Ringschraube (68) an der korrespondierenden Stirnfläche des Lagerinnenringes (64) anliegt.

10. Federbeinanordnung nach einem der Ansprüche 1 bis 9, **dadurch gekennzeichnet, dass** die Führungshülse (50) einen im Durchmesser verminderten Nabenabschnitt (50a) aufweist, der ein in axialer und radialer Richtung wirkendes Wälzlager (46) trägt, über das die Stellspindel (40) drehbar gelagert ist, wobei insbesondere der Nabenabschnitt (50a) die Tragplatte (60) unterhalb des Dämpferlagers (22) durchdringt und mit der Tragplatte (60) über eine Gewindeverbindung (78) verschraubt ist.

11. Federbeinanordnung nach Anspruch 10, **dadurch gekennzeichnet, dass** die Stellspindel (40) über zwei axial voneinander beabstandete Wälzlager (46, 48) drehbar auf der Führungshülse (50) gelagert ist, wobei das obere Lager (46) ein Vierpunkt-Kugellager und das untere Lager (48) ein Rollen- oder Nadellager ist.

12. Federbeinanordnung nach einem der Ansprüche 9 bis 11, **dadurch gekennzeichnet, dass** der zapfenförmige Fortsatz (56a) am Dämpferroh (56) des Stoßdämpfers (12) ausgebildet ist, wobei der Fortsatz (56a) den Naben abschnitt (50a) der Führungshülse (50) und das Dämpferlager (22) durchdringt, und dass die Führungshülse (50) mit dem Nabenabschnitt (50a) ein definiertes Umfangsspiel (s) zum radial innenliegenden Dämpferrohr (56) aufweist.

13. Federbeinanordnung nach Anspruch 12, **dadurch gekennzeichnet, dass** um die Kolbenstange (52) des an einer Stützstrebe (26) mit einem unteren Federteller (32) befestigten Stoßdämpfers (12) ein gummielastischer Anschlagpuffer (54) angeordnet ist, der sich bei einer stärkeren Kompression des Federbeines (10) an dem darüber liegenden Dämpferrohr (56) als Zusatzfeder anlegt.

## Claims

1. Suspension strut arrangement for a wheel suspension of a motor vehicle, which arrangement is formed from a telescopic shock absorber (12), a suspension spring (14) and a pre-loaded spring (16), the suspension spring (14) and the pre-loaded spring (16) being supported on the bodywork (24) of the motor vehicle and on a wheel suspension element via a spring plate (32, 34) and a third spring plate (38) positioned therebetween being displaceably guided along the longitudinal axis of the shock absorber relative to the bodywork (24) via an electrically driven actuator (36) arranged inside the springs (14, 16), the actuator (36) comprising an adjusting spindle (40) which is rotatably mounted about the shock absorber (12) and an adjusting nut (44) which is connected to the displaceable spring plate (38), the suspension spring (14) and the pre-loaded spring (16) being supported on the bodywork (24) of the motor vehicle via a rubber-resilient suspension strut bearing (20) and the shock absorber (12) being supported thereon via a rubber-resilient damper bearing (22), in such a way that a load path of the telescopic shock absorber (12) towards the vehicle bodywork (24) is decoupled from the suspension strut bearing (20), **characterised in that**, for decoupling the telescopic shock absorber (12) from the adjusting spindle (40), the actuator (36), together with the suspension spring (14) and the pre-loaded spring (16), is supported on the bodywork (24) of the motor vehicle via the rubber-resilient suspension strut bearing (20), and **in that** a guide sleeve (50) is arranged between the adjusting spindle (40) and the telescopic shock absorber (12), inside which guide sleeve the telescopic shock absorber (12) is arranged and on which guide sleeve the radially outer adjusting spindle (40) is rotatably mounted.

2. Suspension strut arrangement according to claim 1, **characterised in that** a defined level of peripheral play (s) is provided between the guide sleeve (50) and the radially internal telescopic shock absorber (12).

3. Suspension strut arrangement according to either claim 1 or claim 2, **characterised in that** the suspension strut bearing (20) is supported on the vehicle bodywork (24) via an outer bearing ring (62), and **in that** the damper bearing (22) is supported on the vehicle bodywork (24) via a support part (24a).

4. Suspension strut arrangement according to claim 3, **characterised in that** the cup-shaped support part (24a) is integrally formed on a dome-like portion of the vehicle bodywork (24), on which portion the outer bearing ring (62) of the suspension strut bearing (20) is also supported.

5. Suspension strut arrangement according to any of the preceding claims, **characterised in that** the internal bearing ring (64) of the suspension strut bearing (20) cooperates with a support plate (60), to which in particular a pot-shaped housing (70) of the annular electric motor (74) of the actuator (36) and/or, radially internally, the guide sleeve (50) are fastened.

6. Suspension strut arrangement according to any of the preceding claims, **characterised in that** the centroids of the suspension strut bearing (20) and the damper bearing (22) are in substantially identical geometric locations.

7. Suspension strut arrangement according to any of claims 3 to 6, **characterised in that** the radially internal damper bearing (22) is formed by two elastomeric rings (82) which are arranged on either side of the cup-shaped support part (24a) provided on the bodywork (24) and which are clamped in particular to a pin-shaped projection (56a) of the shock absorber (12) between stop discs (84) by means of a screw connection (86).

8. Suspension strut arrangement according to any of the preceding claims, **characterised in that** the resilient bearing body (66) of the first suspension strut bearing (20) is substantially conical and is designed to taper upwards.

9. Suspension strut arrangement according to any of claims 5 to 8, **characterised in that** the support plate (60), together with a hub-shaped projection (60a), surrounds the internal bearing ring (64) of the suspension strut bearing (20) and is fastened by means of an annular screw (68) which is hat-shaped in cross section, the annular screw (68) which has an external thread (68a) being screwed into an internal thread of the projection (60a) and a flange portion (68b) of the annular screw (68) which projects radially outwards abutting the corresponding end face of the bearing inner ring (64).

10. Suspension strut arrangement according to any of claims 1 to 9, **characterised in that** the guide sleeve (50) has a hub portion (50a) which has a reduced diameter and supports a roller bearing (46) which acts in an axial and radial direction, via which roller bearing the adjusting spindle (40) is rotatably mounted, in particular the hub portion (50a) penetrating the support plate (60) underneath the damper bearing (22) and being screwed to the support plate (60) via a threaded connection (78).

11. Suspension strut arrangement according to claim 10, **characterised in that** the adjusting spindle (40) is rotatably mounted on the guide sleeve (50) via two roller bearings (46, 48) which are spaced apart from one another, the upper bearing (46) being a four-point ball bearing and the lower bearing (48) being a rolling or needle bearing.

12. Suspension strut arrangement according to any of claims 9 to 11, **characterised in that** the pin-shaped projection (56a) is formed on the damper pipe (56) of the shock absorber (12), the projection (56a) penetrating the hub portion (50a) of the guide sleeve (50) and the damper bearing (22), and **in that** the guide sleeve (50) together with the hub portion (50a) has a defined level of peripheral play (s) relative to the radially internal damper pipe (56).

13. Suspension strut arrangement according to claim 12, **characterised in that** a rubber-resilient stop buffer (54) is arranged around the piston rod (52) of the shock absorber (12) which is fastened to a support brace (26) by a lower spring plate (32), which stop buffer rests on the damper pipe (56), which is positioned thereabove, as an overload spring when the suspension strut (10) is highly compressed.

## Revendications

1. Agencement de jambe de force à ressort pour suspension de roue d'un véhicule automobile, qui est formé d'un amortisseur de chocs télescopique (12), d'un ressort de suspension (14) et d'un ressort accumulateur (16), dans lequel le ressort de suspension (14) et le ressort accumulateur (16) s'appuient via des cuvettes de ressort (32, 34) sur la carrosserie (24) du véhicule automobile et sur un élément de suspension de roue, et une troisième cuvette de ressort (38) disposée entre eux est guidée à coulissement via un mécanisme de réglage (36) agencé à l'intérieur des ressorts (14, 16) et entraîné électriquement par rapport à la carrosserie (24) le long de l'axe longitudinal de l'amortisseur de chocs, dans lequel le mécanisme de réglage (36) présente une broche de réglage (40) montée à rotation sur l'amortisseur de chocs (12) et un écrou de serrage (44) relié à la cuvette de ressort (38) mobile, dans lequel le ressort de suspension (14) et le ressort accumulateur (16) s'appuient sur un palier de jambe de force à ressort (20) de même élasticité que le caoutchouc et l'amortisseur de chocs (12) sur un palier d'amortisseur de chocs (22) sur la carrosserie (24) du véhicule automobile de sorte qu'un trajet de charge de l'amortisseur de chocs télescospique (12) soit désaccouplé du palier de la jambe de force à ressort (20) à la carrosserie (24) du véhicule, **caractérisé en ce que**, pour désaccoupler l'amortisseur de chocs télescopique (12) de la broche de réglage (40), le mécanisme de serrage (36) conjointement avec le ressort de suspension (14) et le ressort accumulateur (16) s'appuient via le palier de jambe de force à ressort (20) élastique comme le caoutchouc s'appuie sur la carrosserie (24) du véhicule automobile et, entre la broche de réglage (40) et l'amortisseur de chocs télescopique (12), est agencée une douille de guidage (50), à l'intérieur de laquelle l'amortisseur de chocs télescopique (12) est aménagé et sur laquelle la broche de réglage radialement externe (40) est montée à rotation.

2. Agencement de jambe de force à ressort selon la revendication 1, **caractérisé en ce qu'**il est prévu entre la douille de guidage (50) et l'amortisseur de chocs télescopique (12) un jeu (s) périphérique défini.

3. Agencement de jambe de force à ressort selon la revendication 1 ou la revendication 2, **caractérisé en ce que** le palier de jambe de force à ressort (20) s'appuie via un anneau de palier externe (62) sur la carrosserie (24) du véhicule et **en ce que** le palier (22) de l'amortisseur s'appuie via une partie d'appui (24a) sur la carrosserie (24) du véhicule.

4. Agencement de jambe de force à ressort selon la revendication 3, **caractérisé en ce que** la partie d'appui (24a) en forme de tasse est formée sur une section en forme de dôme de la carrosserie (24) du véhicule, sur laquelle section la bague de palier externe (62) du palier de jambe de force à ressort (20) s'appuie également.

5. Agencement de jambe de force à ressort selon l'une quelconque des revendications précédentes, **caractérisé en ce que** la bague de palier interne (64) du palier de jambe de force à ressort (20) coopère avec une plaque d'appui (60), sur laquelle, en particulier, sont fixés un boîtier en forme de pot (70) du moteur électrique annulaire (74) du mécanisme de réglage (36) et/ou, radialement à l'intérieur, la douille de guidage (50).

6. Agencement de jambe de force à ressort selon l'une quelconque des revendications précédentes, **caractérisé en ce que** les centres de gravité en surface du palier de jambe de force à ressort (20) et du palier d'amortisseur (22) présentent au moins des lieux géométriques sensiblement identiques.

7. Agencement de jambe de force à ressort selon l'une quelconque des revendications 3 à 6, **caractérisé en ce que** le palier d'amortisseur (22) se trouvant radialement à l'intérieur est formé par deux anneaux élastomères (82) agencés des deux côtés de la partie d'appui (24a) en forme de tasse prévue sur la carrosserie (24), qui sont fixés en particulier sur un prolongement en forme de tourillon (56a) de l'amortisseur de chocs (12) entre des rondelles de butée au moyen d'une liaison à vis (86).

8. Agencement de jambe de force à ressort selon l'une quelconque des revendications précédentes, **caractérisé en ce que** le corps de palier élastique (66) du premier palier de jambe de force à ressort (20) est conformé sensiblement en cône et s'amincit vers le haut.

9. Agencement de jambe de force à ressort selon l'une quelconque des revendications 5 à 8, **caractérisé en ce que** la plaque d'appui (60) enserre avec un prolongement (60a) en forme de moyeu la bague de palier interne (64) du palier de jambe de force à ressort (20) et est fixée au moyen d'une vis annulaire (68) en forme de calotte en coupe transversale, dans lequel la vis annulaire (68) est vissée par un filet externe (68a) dans un filet interne du prolongement (60a) et une section bridée (68b) de la vis annulaire (68) saillant radialement vers l'extérieur s'applique sur la face frontale correspondante de l'anneau intérieur de palier (64).

10. Agencement de jambe de force à ressort selon l'une quelconque des revendications1 à 9, **caractérisé en ce que** la douille de guidage (50) présente une section de moyeu (50a) de moindre diamètre, qui porte un palier à roulement (46) opérant dans la direction axiale et dans la direction radiale, via lequel la broche de réglage est montée à rotation, dans lequel, en particulier, la section de moyeu (50a) traverse la plaque d'appui (60) en dessous du palier d'amortisseur (22) et est vissée avec la plaque d'appui (60) via une liaison vissée (78).

11. Agencement de jambe de force à ressort selon la revendication 10, **caractérisé en ce que** la broche de réglage (40) est montée à rotation sur la douille de guidage (50) via deux paliers à roulement (46, 48) espacés axialement l'un de l'autre, le palier supérieur (46) étant un roulement à billes en quatre points et le palier inférieur (48) étant un palier à rouleaux ou un palier à aiguilles.

12. Agencement de jambe de force à ressort selon l'une quelconque des revendications 9 à 11, **caractérisé en ce que** le prolongement en forme de tourillon (56a) est formé sur le tube d'amortissement (56) de l'amortisseur de chocs (12), dans lequel le prolongement (56a) traverse la section de moyeu (50a) de la douille de guidage (50) et le palier d'amortissement (22) et **en ce que** la douille de guidage (50) présente avec la section de moyeu (50a) un jeu (s) périphérique défini avec le tube d'amortissement (56) se trouvant radialement à l'intérieur.

13. Agencement de jambe de force à ressort selon la revendication 12, **caractérisé en ce qu'**on agence, autour de la tige de piston (52) de l'amortisseur de chocs (12) fixé à une entretoise d'appui (26) avec une cuvette de ressort inférieure (32), un tampon de butée (54) élastique comme le caoutchouc, qui, lors d'une plus forte compression de la jambe de force à ressort (10), s'applique sur le tube d'amortissement (56) qui se trouve en plus comme ressort d'appoint.
